(19) Europäisches Patentamt
European Patent Office
Office européen des brevets

(11) **EP 4 523 926 B1**

(12) **EUROPEAN PATENT SPECIFICATION**

(45) Date of publication and mention
of the grant of the patent:
**03.06.2026 Bulletin 2026/23**

(21) Application number: **24195920.4**

(22) Date of filing: **22.08.2024**

(51) International Patent Classification (IPC):
**B60C 11/00** *(2006.01)*     **B60C 1/00** *(2006.01)*
**B60C 11/03** *(2006.01)*     **C08L 21/00** *(2006.01)*
**C08K 3/36** *(2006.01)*     **B60C 11/04** *(2006.01)*

(52) Cooperative Patent Classification (CPC):
(C-Sets available)
**B60C 1/0016; B60C 11/005; B60C 11/033;**
**B60C 11/04; C08L 7/00;** B60C 11/1281;
B60C 2011/0025; B60C 2011/0348;
B60C 2011/0355; B60C 2200/06; C08K 3/36;
Y02T 10/86                         (Cont.)

(54) **TIRE FOR HEAVY LOAD**

REIFEN FÜR SCHWERE LASTEN

PNEUMATIQUE POUR CHARGE LOURDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.09.2023 JP 2023148607**

(43) Date of publication of application:
**19.03.2025 Bulletin 2025/12**

(73) Proprietor: **Sumitomo Rubber Industries, Ltd.
Kobe-shi, Hyogo-ken 651-0072 (JP)**

(72) Inventors:
• **IZUMO, Suguru**
**Kobe-shi, 651-0072 (JP)**
• **YOSHINO, Masayuki**
**Kobe-shi, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 4 197 805        EP-A1- 4 389 457
US-A1- 2023 023 252**

(52) Cooperative Patent Classification (CPC): (Cont.)

C-Sets
**C08L 7/00, C08L 9/00**

**Description**

TECHNICAL FIELD

The present invention relates to a tire for heavy load.

BACKGROUND OF THE INVENTION

Nowadays, with an increasing demand to consider the environmental load, electric vehicles are becoming more popular. Due to the weight of the battery also added to the electric vehicles, the tires of the electric vehicles tend to be heavily loaded.

Examples of techniques to improve wet grip performance of a tire for heavy load include, for example, forming, at an inner end part of a lug groove, a shallow bottom part of a predetermined size (see JPH115411A).

Moreover, as a technique to improve abrasion resistance of a truck tire or a bus tire, a technique to make fine particles or a high structure for carbon black is known (see, for example, JPH06279624A).

EP 4 197 805 A1 discloses a tire including a tread portion which contains a rubber composition containing rubber components including at least one isoprene-based rubber and at least one styrene-butadiene rubber, at least one silica having an average primary particle size of 15 nm or less, and at least one resin component.

US 2023/023252 A1 discloses a tire comprising a tread part of a rubber composition comprising a rubber component comprising an isoprene-based rubber and a styrene-butadiene rubber, wherein the tread part comprises two or more circumferential main grooves extending in a tire circumferential direction, and land parts partitioned by the circumferential main grooves, wherein at least one land part of the land parts comprises at least one given flask-like circumferential groove extending in the tire circumferential direction.

SUMMARY OF THE INVENTION

When a tread part is provided with a large number of lug grooves and the like, the land ratio decreases as a result.

Then, the rigidity of a land part decreases, so that the tread part generates heat, and abrasion resistance of a tire decreases.

Moreover, with the above-described technique to make fine particles or high structure for carbon black, due to deterioration of processability along with making the fine particles for carbon black, the dispersibility of carbon black also deteriorates, and conversely abrasion resistance of a tire may also deteriorate. Therefore, there was a limitation with a conventional technique to improve performance by an improvement in carbon black.

An object of the present invention is to provide a tire for heavy load with an improvement in wet grip performance thereof.

A tire being one embodiment of the present invention is

a tire for heavy load, which tire comprises a tread part,
wherein the tread part comprises one or a plurality of main circumferential grooves extending continuously in the tire circumferential direction,
wherein the tread part is composed of a rubber composition comprising a rubber component and silica,
wherein the groove depth of the deepest part of the main circumferential groove is defined as $H_1$, in mm, and
the content of silica based on 100 parts by mass of the rubber component when the rubber composition comprises silica is defined as D, in parts by mass,
$H_1$ is 15.0 or less, $H_1 \times D$ is 250 or more, preferably 350 or more,
a land ratio R on the ground surface of the tread part after the tread part is caused to wear along the tread radius such that the groove depth of the deepest part of the main circumferential groove is 75% of that when the tire is new is 0.90 or more, and wherein a content of a styrene-butadiene rubber in the rubber component is defined as Sc, in % by mass, Sc/D is 0.60 or more.

According to the present invention, a tire for heavy load with an improvement in wet grip performance thereof is provided.

BRIEF DESCRIPTION OF THE DRAWINGS

FIG. 1 is a cross-sectional view in which is shown a part of a tire for heavy load, according to one embodiment of the present invention.

FIG. 2 is a developed view of a tread part of the tire for heavy load, according to one embodiment of the present invention.

FIG. 3 is a cross-sectional view in which is shown a thin circumferential groove of the tread part of the tire for heavy load, according to one embodiment of the present invention.

FIG. 4 is a cross-sectional view in which is shown a thin circumferential groove of the tread part of the tire for heavy load, according to one embodiment of the present invention.

DETAILED DESCRIPTION

A tire for heavy load being one embodiment of the present invention is a tire for heavy load, which tire comprises a tread part, wherein the tread part comprises one or a plurality of main circumferential grooves extending continuously in the tire circumferential direction, wherein the tread part is composed of a rubber composition comprising a rubber component and silica, wherein the groove depth of the deepest part of the main circumferential groove is defined as $H_1$, in mm, and the content of silica based on 100 parts by mass of the rubber component when the rubber composition comprises silica is defined as D, in parts by mass, $H_1$ is 15.0 or less, $H_1 \times D$ is 250 or more, preferably 350 or more, a land ratio R on the ground surface of the tread part after the tread part is caused to wear along the tread radius such that the groove depth of the deepest part of the main circumferential groove is 75% of that when the tire is new is 0.90 or more, and wherein a content of a styrene-butadiene rubber in the rubber component is defined as Sc, in % by mass, Sc/D is 0.60 or more.

The mechanism for an improvement in wet grip performance in the present invention, though it is not intended to be bound by theory, can be considered as follows, for example:

First, (1) with the groove depth $H_1$ of the deepest part of the main circumferential groove being 15.0 mm or less and the land ratio R on the ground surface of the tread part after the tread part is caused to wear along the tread radius such that the groove depth of the deepest part of the main circumferential groove is 75% of that when the tire is new being 0.90 or more, the ground contact area of the tire in the mid-wear stage and thereafter increases, causing the road surface groundability of the tire to improve. The improvement in the road surface groundability of the tire makes it possible to decrease the thickness of the tread part and makes it possible to suppress the deformation due to shearing of the tread part. On the other hand, when the deformation of the tread part is suppressed, heat generation of the tread part is also suppressed. Under such conditions, the contribution of hysteresis friction (tan $\delta$) to wet grip performance of the tire decreases. Therefore, with respect to wet grip performance, the followability of the tread part to the wet road surface becomes more important. Then, (2) silica can be compounded in the rubber composition constituting the tread part to increase flexibility of the rubber composition and improve the followability of the tread part to the wet road surface. Then, (3) with $H_1 \times D$ being set to be 250 or more, the content of silica increases even when $H_1$ is small, so that the road surface groundability of the tire and the road surface followability of the tread part synergistically improve. Then, it is considered that the notable effect is achieved with the cooperation of (1) to (3) in the above, which notable effect is that the tire for heavy load with an improvement in wet grip performance thereof is provided.

D/R is preferably 30 or more and more preferably 50 or more. It is considered that the content of silica can be secured in accordance with the higher road surface followability by compounding silica in a predetermined amount or more with respect to the land ratio, so that wet grip performance is further improved even under high load.

A content of a styrene-butadiene rubber in the rubber component is defined as Sc, in % by mass, Sc/D is 0.60 or more. It is considered that the dispersibility of silica can be improved by also increasing the content of styrene-butadiene rubber in accordance with an increase in the content of silica, flexibility of the rubber composition in the micro-deformation region increases, and wet grip performance further improves.

Preferably, the total styrene amount in the rubber component is defined as S, in % by mass, S/D is 0.130 or more. It is considered that the dispersibility of silica can be improved with the styrene group by also increasing the total styrene amount in accordance with an increase in the content of silica, flexibility of the rubber composition in the micro-deformation region increases, and wet grip performance further improves.

Preferably, the tread part comprises two main circumferential grooves extending continuously in the tire circumferential direction, a pair of shoulder land parts divided by the main circumferential groove and a ground end, and a crown land part positioned between the pair of shoulder land parts; and the crown land part comprises one or a plurality of thin circumferential grooves extending continuously in the tire circumferential direction. It is considered that configuring the tread part to have such a structure makes it possible to secure the pattern rigidity and suppress heat generation, further improving wet grip performance.

Preferably, the crown land part comprises a sipe extending in the tire width direction, and the depth of the deepest part of the sipe is defined as $H_2$, in mm, $H_2/H_1$ is 0.25 or more. It is considered that, by setting the $H_2/H_1$ to be within the above-described range, a decrease in wet grip performance in the mid-wear stage and thereafter along with making the tread part highly rigid can be suppressed.

Preferably, the pair of shoulder land parts does not comprise a lug groove. It is considered that, by not providing

# EP 4 523 926 B1

the shoulder land part with the lug groove, the rigidity of the shoulder land part can be improved and heat generation can be suppressed, improving the abrasion resistance of the shoulder land part.

Preferably, the thickness of the tread part when the tire is new is defined as T, in mm, T x D is 320 or more. It is considered that, by increasing the content of silica even when the tread part is thin, flexibility of the rubber composition constituting the tread part is increased, making it possible to improve the followability of the tread part to the wet road surface, and wet grip performance further improves.

Preferably, the thin circumferential groove comprises a neck part having a small groove width, and a trunk part arranged on the inner side of the neck part in the tire radial direction, which trunk part has a portion with a groove width greater than the maximum groove width of the neck part.

It is considered that the neck part and the trunk part of the thin circumferential groove can be provided to suppress a decrease in wet grip performance in the mid-wear stage and thereafter along with making the tread part highly rigid.

The complex elastic modulus at 0°C (0°C E\*) of the rubber composition is preferably 8.5 MPa or more and 13.0 MPa or less. It is considered that 0°C E\* being in the above-described range makes it easy to follow even the unevenness of a wet road surface, so that wet grip performance further improves.

The tan $\delta$ at 0°C (0°C tan $\delta$) of the rubber composition is 0.15 or more and 0.25 or less. It is considered that 0°C tan $\delta$ being in the above-described range makes it possible to secure the energy loss required for gripping, so that wet grip performance further improves.

The tread part is composed of two or more layers, a rubber layer whose outer surface constitutes the tread ground surface is defined as a cap rubber layer, the thickness of the cap rubber layer is defined as t1, in mm, the thickness of the tread part when the tire is new is defined as T, in mm, t1/T is preferably 0.76 or more, more preferably 0.79 or more, furthermore preferably 0.80 or more.

At least one of the thin circumferential grooves preferably comprises an opening whose groove width increases in a tapered shape, which opening is arranged on the outer side of the neck part in the tire radial direction.

<Definition>

The "tread part" is a portion forming the ground surface of a tire, and is a member being in the tire radial section and being on the outer side in the tire radial direction of a tire-framework forming member, if any, which tire-framework forming member includes a belt layer, a belt reinforcing layer, a carcass layer, and the like, in which tire-framework forming member the tire framework is formed of steel or a textile material.

A "standardized rim" is a rim defined for each tire in a standard system including a standard, on which the tire is based, by the standard, it refers to, for example, a "standard rim" in an applicable size listed in the "Jatma Year Book" in JATMA (Japan Automobile Tire Manufacturers Association), "Measuring Rim" listed in the "STANDARDS MANUAL" in ETRTO (The European Tyre and Rim Technical Organisation), or "Design Rim" listed in the "YEAR BOOK" in TRA (The Tire and Rim Association, Inc.), and JATMA, ETRTO, and TRA are referred to in that order, and, in a case that there is an applicable size at the time of reference, such a standard is followed. Then, in a case of a tire not defined in a standard, it refers to the smallest rim diameter followed by the smallest rim width among rims that can be assembled and that can hold internal pressure, in other words, rims that do not cause air leakage between the rim and the tire.

A "standardized internal pressure" is an air pressure defined for each tire in a standard system including a standard, on which the tire is based, by the standard, it refers to a "MAXIMUM AIR PRESSURE in JATMA, "INFLATION PRESSURE" in ETRTO, or a maximum value described in Table "TIRE LOAD LIMITS AT VARIOUS COLD INFLATION PRESSURES" in TRA, and JATMA, ETRTO, and TRA are referred to in that order in the same manner as for the "standardized rim" and such a standard is followed. Then, in a case of a tire not defined in a standard, it refers to the standardized internal pressure (but no less than 250 kPa) of another tire size (as defined in the standard) listed with the standardized rim as the standard rim. Besides, in a case that the standardized internal pressure of 250 kPa or more is listed in a plurality, it refers to the smallest value among them.

A "standardized state" is a state where the tire is rim-assembled on a standardized rim, the air is filled at a standardized internal pressure, and no load is applied.

A "standardized load" is a load defined for each tire in a standard system including a standard, on which the tire is based, by the standard, and is, for example, a "maximum load rating" in JATMA, "LOAD CAPACITY" in ETRTO, or a maximum value described in Table "TIRE LOAD LIMITS AT VARIOUS COLD INFLATION PRESSURES" in TRA, and JATMA, ETRTO, and TRA are referred to in that order in the same manner as for the standardized rim and the standardized internal pressure and, in a case that there is an applicable size at the time of reference, such a standard is followed. Then, in a case of a tire having a size not specified in the standard, a standardized load $W_L$ is determined according to the below-described calculation. V is a virtual volume, in $mm^3$, of the tire, Dt is a tire outer diameter, in mm, Ht is a cross-sectional height, in mm, of the tire, and Wt is a cross-sectional width, in mm, of the tire. Besides, in the present specification, the "maximum load rating" means the same as the standardized load.

$$W_L = 0.000011 \times V + 175$$

$$V = \{(Dt/2)^2 - (Dt/2 - Ht)^2\} \times \pi \times Wt$$

A "tread ground end Te" refers to the ground position on the outermost side in the tire width direction when a tire in a standardized state is loaded with a standardized load and in contact with a flat surface with a camber angle of 0 degrees. A "tread ground width TW" is the distance between the tread ground ends Te in the tire width direction.

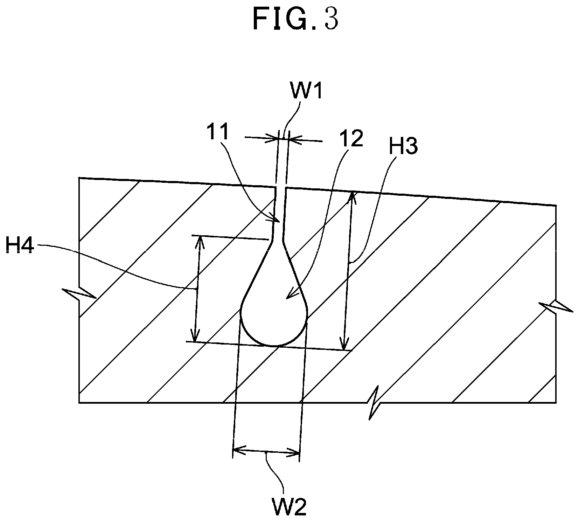

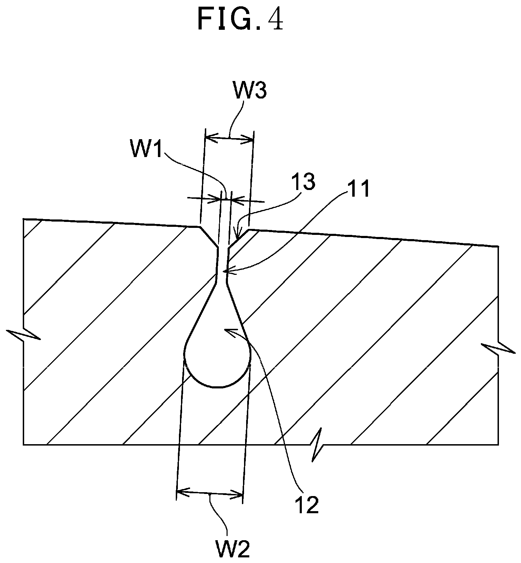

A "main circumferential groove" means a groove extending continuously in the tire circumferential direction, wherein the groove is a groove whose maximum value W4 of a groove width orthogonal to the longitudinal direction is over 2.0% of the tread ground width TW when the tire is new. Moreover, a "thin circumferential groove" means a groove extending continuously in the tire circumferential direction, wherein the groove is a groove whose groove width orthogonal to the longitudinal direction (a minimum groove width W1 of the neck part in FIGS. 3 and 4) is 2.0% or less of the tread ground width TW when the tire is new.

A "sipe" means a notch-shaped body extending in the tire width direction and whose width orthogonal to the groove longitudinal direction is less than 1.5 mm when the tire is new. Moreover, a "lug groove" means a groove-shaped body extending in the tire width direction and whose groove width orthogonal to the groove longitudinal direction is 1.5 mm or more when the tire is new.

The "tread radius" means the radius of curvature of an arc formed by the tread surface from the intersection between the tire equator and the tread surface to the outer side in the tire width direction in the meridian section of a tire in the standardized state.

A "land ratio R on the ground surface of the tread part after the tread part is caused to wear along the tread radius such that the groove depth of the deepest part of the main circumferential groove is 75% of that when the tire is new" is the ratio of the total area of the ground surface in contact with the ground, with respect to the total surface area of the tread surface (in other words, the area obtained by the outer ring contour in the ground shape of the tread part) assuming that all the grooves are filled, when a standardized load is applied on a standardized tire and the tire is in contact with a flat surface with a camber angle of 0 degrees after the tread part is caused to wear along the tread radius such that the groove depth of the deepest part of the main circumferential groove is 75% of that when the tire is new. Here, all of the grooves include the above-described main circumferential groove, thin circumferential groove, lug groove, and sipe.

The "total area of the ground surface" is calculated from the ground shape of the tire. The ground shape is obtained by mounting the tire on a standardized rim, applying a standardized internal pressure on the tire, allowing the tire to stand for 24 hours at 25°C, and then inking the tread surface, loading the tread surface with the load at a maximum load rating, pressing the tread surface against a piece of cardboard (a camber angle of 0°), and transferring ink onto the paper. Then, the tire is circumferentially rotated by 72° each time and ink is transferred at five locations. In other words, the ground shape is obtained five times. The actual ground contact area is determined by the average value of five locations of the area of the ink portion.

A "thickness T, in mm, of the tread part when the tire is new" is the thickness of the tread part on the tire center line, measured with the new tire being cut in the plane including the tire rotational axis and being held in a standardized rim. Besides, an end of the thickness of the entire tread part, which end is on the inner side in the tire radial direction, is an interface of the rubber composition constituting the tread part, which interface is on the inner side in the tire radial direction, and, in a case that the tire comprises a belt reinforcing layer, a belt layer, and a carcass layer, is, among them, the thickness of the entire rubber layer on the outer side in the tire radial direction in relation to the outermost layer in the tire radial direction. Besides, in a case a groove is provided on the tire equator, the thickness of the entire tread is measured assuming that the groove is filled. A thickness t1 of the cap rubber layer constituting the tread part and the thickness of the other rubber layer are also measured in a similar manner.

The "groove depth $H_1$ of the deepest part of the main circumferential groove" is determined by the distance between the tread ground surface and the deepest part of the groove bottom of the main circumferential groove. Besides, the deepest part of the groove bottom of the main circumferential groove is, of main circumferential grooves adjacent to the crown land part, the deepest part of the groove bottom of the main circumferential groove having the greatest groove depth.

The "depth $H_2$ of the deepest part of the sipe" is determined by the distance between the tread ground surface and the deepest part of the sipe. Besides, the deepest part of the sipe is the deepest part of, among sipes present in the crown land part, a sipe having the greatest depth.

A "groove depth $H_3$ of the deepest part of the thin circumferential groove" is determined by the distance between the tread ground surface and the deepest part of the groove bottom of the thin circumferential groove. Besides, the deepest part of the groove bottom of the thin circumferential groove is, the deepest part of the groove bottom of, among thin circumferential grooves present in the crown land part, a thin circumferential groove having the greatest groove depth.

The "lug groove" is a groove-shaped body extending in the tire width direction and whose groove width being orthogonal to the longitudinal direction of the groove when the tire is new is 1.5 mm or more.

A "total styrene amount S, in % by mass, in the rubber component" is a total content, in % by mass, of a styrene part comprised in 100% by mass of the rubber component, and is calculated by $\Sigma$ (the styrene content, in % by mass, of each styrene-containing rubber x the content, in % by mass, in the rubber component of each styrene-containing rubber / 100). For example, in a case that the rubber component comprises a first SBR (styrene content of 25% by mass) at 30% by mass, a second SBR (styrene content of 27.5% by mass) at 60% by mass, and BR at 10% by mass, for example, the total styrene amount (S) in the rubber component at 100% by mass is 24.0% by mass (=25 x 30/100+27.5 x 60/100). Besides, the styrene content of the styrene-containing rubber is calculated by $^1$H-NMR measurement.

A "vinyl content, in mol %, of the rubber component" refers to the result of the addition of a value in which the vinyl butadiene unit content derived from the 1,2-butadiene bond and the content rate in the entire rubber component are multiplied is calculated for each rubber constituting the entire rubber component, or 100% by mass.

The "rubber component of the rubber composition" is a component contributing to cross-linking within the rubber composition and generally has a weight-average molecular weight (Mw) of 10,000 or more.

<Measuring method>

The "rubber hardness" is a value measured by cutting out a tread part forming the ground surface such that the tire radial direction is the thickness direction to prepare a sample for hardness measurement and pressing a type A durometer against the sample from the ground surface side at 23°C in accordance with JIS K 6253.

Measuring the temperature distribution curve of tan $\delta$ under a condition of a frequency of 10 Hz, an initial strain of 10%, a dynamic strain of $\pm 0.5\%$, and a temperature increase rate of 2°C/min using a dynamic viscoelasticity evaluation apparatus (for example, EPLEXOR series manufactured by gabo Systemtechnik GmbH), the "glass transition temperature of the rubber composition" is determined as the temperature corresponding to the greatest tan $\delta$ value in the obtained temperature distribution curve (tan $\delta$ peak temperature). A sample for measurement is a vulcanized rubber composition with 20 mm in length x 4 mm in width x 1 mm in thickness. When the sample is produced by cutting it out from the tread part of a tire, the longitudinal direction is the tire circumferential direction.

The "complex elastic modulus at 0°C (0°C E*)" is the complex elastic modulus measured under a condition of a temperature at 0°C, a frequency of 10 Hz, an initial strain of 10%, a dynamic strain of $\pm 2.5\%$, and an elongation mode using a dynamic viscoelasticity evaluation apparatus (for example, EPLEXOR series manufactured by gabo Systemtechnik GmbH). A sample for the present measurement is produced in the same manner as in a case of the glass transition temperature of the rubber composition.

The "tan $\delta$ at 0°C (0°C tan $\delta$) is the loss tangent (tan $\delta$) measured under a condition of a temperature at 0°C, a frequency of 10 Hz, an initial strain of 10%, a dynamic strain of $\pm 2.5\%$, and an elongation mode using a dynamic viscoelasticity evaluation apparatus (for example, EPLEXOR series manufactured by gabo Systemtechnik GmbH). A sample for the measurement of loss tangent is produced in the same manner as in a case of the glass transition temperature of the rubber composition.

A "styrene content" is a value calculated by $^1$H-NMR measurement and it is applied to a rubber component having repeating units derived from styrene, such as an SBR and the like, for example. A "vinyl content (1,2-bond butadiene unit amount)" is a value calculated by infrared absorption spectrometry in accordance with JIS K 6239-2:2017 and is applied to a rubber component having repeating units derived from butadiene, such as an SBR, a BR, and the like, for example. A "cis content (cis-1,4-bond butadiene unit amount)" is a value calculated by infrared absorption spectrometry in accordance with JIS K 6239-2:2017 and is applied to a rubber component having repeating units derived from butadiene, such as a BR and the like, for example.

The "average primary particle diameter" is determined by photographing particles with a transmission or scanning electron microscope and taking the arithmetic mean of 400 particle diameters. In a case that the particles are nearly circular in shape, the diameter of the circle is used as the particle diameter; in a case that the particles are needle or rod-shaped, the short diameter is used as the particle diameter; and otherwise the circular equivalent diameter is calculated from the electron microscope image and the calculated diameter is used as the particle diameter. The circular equivalent diameter is determined as "positive square root of (4 x (the area of particles) / $\pi$)". The average primary particle diameter is applied to silica, carbon black, and the like.

A "nitrogen adsorption-specific surface area ($N_2SA$) of silica" is measured by the BET method in accordance with ASTM D 3037-93. A "nitrogen adsorption-specific surface area ($N_2SA$) of carbon black" is measured in accordance with JIS K 6217-2: 2017.

Below, appropriately using the drawings, a tire according to one embodiment of the present invention will be described. Besides, the drawings used merely show specifically one embodiment, so that the present invention is not limited by these drawings.

<Tire>

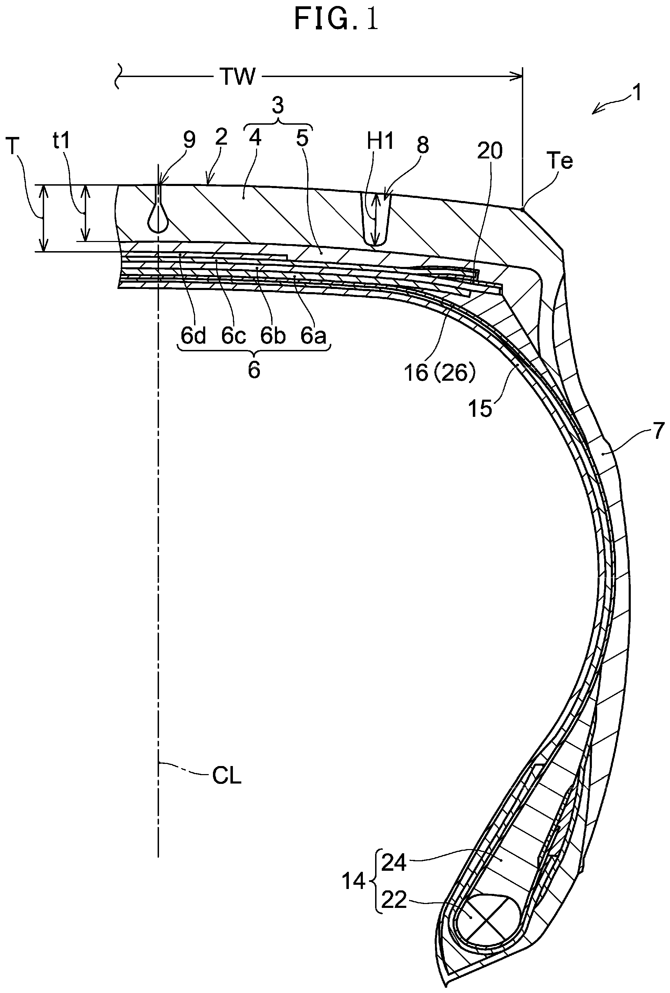

FIG. 1 is a cross-sectional view in which is shown a part of a tire for heavy load, according to one embodiment of the present invention. In FIG. 1, a vertical direction is a radial direction of a tire for heavy load 1, a horizontal direction is a tire width direction of the tire for heavy load 1, and a direction perpendicular to a paper surface is a circumferential direction of the tire for heavy load 1. In FIG. 1, except for the tread pattern, the shape of the tire for heavy load 1 is symmetrical with respect to a tire equator CL.

The tire for heavy load 1 comprises a tread part 3, a belt layer 6, a sidewall part 7, a bead part 14, an inner liner 15, and a carcass 16. The inner liner 15 is positioned on the inner side of the carcass 16. The tread part 3 forms a tread ground surface 2 to be in contact with the road surface. On the tread ground surface 2, two circumferential grooves being a main circumferential groove 8 and a thin circumferential groove 9, continuously extending in the tire circumferential direction, are formed.

The bead part 14 comprises a bead core 22, and an apex 24 extending from the bead core 22 outwardly in the radial direction. The bead core 22 is ring-shaped and comprises a wound non-stretchable wire. The apex 24 tapers outwardly in the tire radial direction.

The carcass 16 is composed of carcass plies 26. The carcass ply 26 is stretched between the bead part 14 on both sides and is positioned along the tread part 3 and the sidewall part 7. The carcass ply 26 is folded around the bead core 22 toward the outer side from the inner side in the tire width direction. The carcass ply 26 is composed of a large number of cords in parallel and a topping rubber. The carcass 16 can be formed of two or more carcass plies 26.

The belt layer 6 extends in the tire width direction. The belt layer 6 is positioned on the inner side of the tread part 3 in the tire radial direction. The belt layer 6 is positioned on the outer side of the carcass 16 in the tire radial direction and reinforces the carcass 16.

The belt layer 6 is formed of four belt plies, comprising a first belt layer 6a, a second belt layer 6b, a third belt layer 6c, and a fourth belt layer 6d, laminated in order from the inner side in the tire radial direction. The first belt layer 6a is laminated on the carcass 16. In FIG. 1, in the tire rotational axis direction, the second belt layer 6b has the greatest width of the above-described four layers and the fourth belt layer 6d has the least width of the above-described four layers, but they are not limited to such aspects.

In FIG. 1, the tread part 3 comprises a cap rubber layer 4 and a base rubber layer 5, the outer surface of the cap rubber layer 4 constitutes the tread ground surface 2, and the base rubber layer 5 is adjacent to the inner side of the cap rubber layer 4 in the tire radial direction, but they are not limited to such aspects, so that, as long as the effects of the present invention are achieved, the tread part can be a single rubber layer, or can further comprise one or a plurality of rubber layers between the base rubber layer 5 and the belt layer 6.

From a viewpoint of suppressing the deformation due to shearing of the tread part, a thickness T of the tread when the tire is new is preferably 23.0 mm or less, more preferably 21.0 mm or less, and further preferably 20.0 mm or less. Moreover, from a viewpoint of fuel efficiency, it is preferably 15.0 mm or more, more preferably 17.0 mm or more, and further preferably 18.0 mm or more.

From a viewpoint of wet grip performance, T x D is preferably 320 or more, more preferably 370 or more, and further preferably 420 or more. Moreover, T x D is preferably 1,000 or less, more preferably 950 or less, and further preferably 900 or less. Besides, D is the content, in parts by mass, of silica based on 100 parts by mass of the rubber component when the rubber composition constituting the tread part comprises silica, and the preferable ranges thereof will be described below.

A thickness t1 of the cap rubber layer is preferably 11.5 mm or more, more preferably 13.5 mm or more, and further preferably 14.5 mm or more. On the other hand, t1 is preferably 19.5 mm or less, more preferably 17.5 mm or less, and further preferably 16.5 mm or less.

From a viewpoint of the effects of the present invention, t1/T is preferably 0.76 or more, more preferably 0.79 or more, and further preferably 0.80 or more. On the other hand, the upper limit value of t1/T is not particularly limited, so that it can be 1.0, and it is preferably less than 1.0, more preferably 0.85 or less, and further preferably 0.83 or less.

A "land ratio R on the ground surface of the tread part after the tread part is caused to wear along the tread radius such that the groove depth of the deepest part of the main circumferential groove is 75% of that when the tire is new" is 0.90 or more, preferably 0.91 or more, and more preferably 0.92 or more. Moreover, from a viewpoint of the effects of the present invention, R is preferably 0.98 or less, more preferably 0.97 or less, further preferably 0.96 or less, and particularly preferably 0.95 or less.

A groove depth $H_1$ of the deepest part of the main circumferential groove 8 is determined by the distance between the tread ground surface 2 and the deepest part of the groove bottom of the main circumferential groove. The groove depth $H_1$ of the deepest part of the main circumferential groove is 15.0 mm or less, more preferably 14.6 mm or less, and further preferably 14.2 mm or less. Moreover, $H_1$ is preferably 10.0 mm or more, more preferably 11.0 mm or more, and further preferably 12.0 mm or more.

$H_1$ x D is 250 or more, preferably 280 or more, more preferably 300 or more, further preferably 350 or more, further preferably 400 or more, further preferably 450 or more, further preferably 500 or more, further preferably 600 or more, and particularly preferably 800 or more. Moreover, from a viewpoint of the effects of the present invention, $H_1 \times D$ is preferably 1,200 or less, more preferably 1,100 or less, and further preferably 1,000 or less. Besides, D is the content, in parts by mass, of silica based on 100 parts by mass of the rubber component when the rubber composition constituting the tread part comprises silica, and the preferable ranges thereof will be described below. Moreover, when the rubber composition constituting the tread part is composed of two or more rubber layers, D is the content, in parts by mass, of silica based on 100 parts by mass of the rubber component when the rubber composition constituting the cap rubber layer comprises silica.

D/R is preferably 20 or more, more preferably 22 or more, further preferably 25 or more, further preferably 30 or more, further preferably 40 or more, and particularly preferably 50 or more. Moreover, the upper limit of D/R is not particularly limited, but it can be set to be 100 or less, 95 or less, or 80 or less, for example.

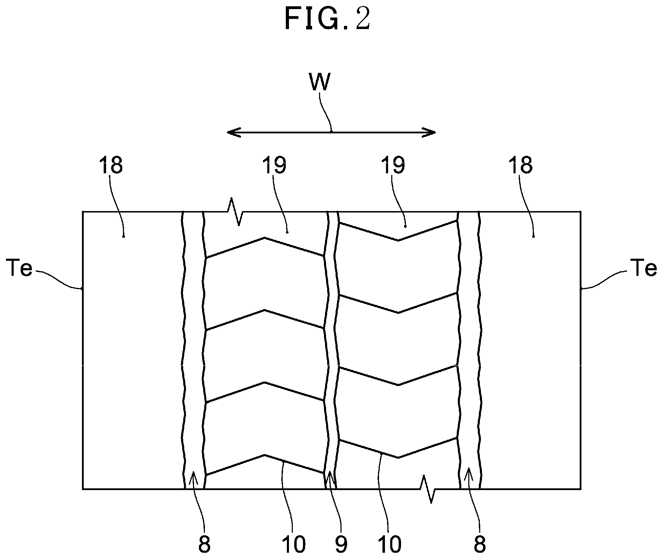

FIG. 2 is a developed view of a tread part of the tire for heavy load, according to one embodiment of the present invention. In FIG. 2, the tread part comprises two main circumferential grooves 8 extending continuously in the tire circumferential direction, a pair of shoulder land parts 18 divided by the main circumferential groove 8 and a ground end Te, and a crown land part 19 positioned between the pair of shoulder land parts 18, and the crown land part 19 comprises the one thin circumferential groove 9 extending continuously in the tire circumferential direction. In FIG. 2, the crown land part 19 comprises the one thin circumferential groove 9 extending continuously in the tire circumferential direction, but it is not limited to such an aspect, so that it can be provided with the thin circumferential groove 9 in a plurality

The crown land part 19 preferably comprises a sipe inclined in the tire circumferential direction or the tire width direction. In FIG. 2, the crown land part 19 is provided with a plurality of center sipes 10 being communicatively connected to the main circumferential groove 8 and the thin circumferential groove 9 and being bent in a process from one end toward the other end in a tire width direction W, but it is not limited to such an aspect, so that it can be parallel to the tire width direction, for example.

A depth $H_2$, in mm, of the deepest part of the center sipe 10 is determined by the distance between the tread ground surface and the deepest part of the sipe. The depth $H_2$ of the deepest part of the sipe is preferably 15.0 mm or less, more preferably 14.0 mm or less, and further preferably 13.0 mm or less. Moreover, $H_2$ is preferably 2.5 mm or more, more preferably 3.0 mm or more, and further preferably 3.5 mm or more.

$H_2/H_1$ is preferably 0.25 or more, more preferably 0.30 or more, and further preferably 0.33 or more. It is considered that, by setting $H_2/H_1$ to be within the above-described range, a decrease in wet grip performance in the mid-wear stage and thereafter along with making the tread part highly rigid can be suppressed. On the other hand, $H_2/H_1$ is preferably 1.0 or less, more preferably 0.95 or less, and further preferably 0.90 or less.

In FIG. 2, the shoulder land part 18 is not provided with a lug groove or a sipe. It is considered that, by not providing the shoulder land part with the lug groove, the rigidity of the shoulder land part can be improved and heat generation can be suppressed, improving the abrasion resistance of the shoulder land part.

FIG. 3 shows, in an enlarged manner, a thin circumferential groove of the tread part of the tire for heavy load, according to one embodiment of the present invention. In FIG. 3, the thin circumferential groove comprises a neck part 11, and a trunk part 12 arranged on the inner side of the neck part in the tire radial direction, which trunk part 12 has a portion with a groove width greater than the maximum groove width of the neck part. In FIG. 3, the groove width of the neck part is fixed at a minimum groove width W1 thereof and constant, but the neck part can have a portion with a groove width being greater than W1 as long as it provides the effects of the present invention. Therefore, in addition to the shape being straight as in FIG. 3, the cross-sectional shape of the neck part can be a zigzag shape. Here, the zigzag shape has the meaning similar to what is described above. Examples of one preferable aspect include the groove width of the neck part being constant at a minimum groove width thereof.

Moreover, the trunk part 12 has a portion with a groove width being greater than the maximum groove width of the neck part. Here, "having the portion with the groove width being greater than the maximum groove width of the neck part" means that the trunk part is configured to be wider than the maximum groove width of the neck part such that the effects of the present invention can be achieved. Therefore, the groove width of the trunk part is not particularly limited as long as the trunk part includes a portion with a groove width being greater than the maximum groove width of the neck part such that the effects of the present invention can be achieved, so that, for example, a part of the groove width of the trunk part can have a portion with a groove width less than the maximum groove width of the neck part, or the trunk part can be configured only with a portion with a groove width being greater than the groove width of the neck part. In FIG. 3, the groove width of the neck part 11 is fixed at the minimum groove width W1 thereof, so that the trunk part 12 is composed only of a portion with a groove width being greater than the groove width of the neck part 11.

The minimum groove width W1 of the neck part is preferably 0.5 mm or more, more preferably 0.7 mm or more, and further preferably 0.9 mm or more. By setting W1 to be within the above-described range, it is made easier for water to flow from the neck part to the trunk part when traveling on a wet road surface, making it possible to easily secure sufficient drainage performance. On the other hand, W1 is preferably 2.0 mm or less, more preferably 1.9 mm or less, and further preferably 1.8 mm or less. By setting W1 to be within the above-described range, when a load is applied to the tread part in the early wear stage, the neck part is likely to close due to the ground pressure, so that the rigidity of the tread part in the tire axial direction is increased. Moreover, the rubber volume of the tread part is easily secured. In this way, abrasion resistance of the tire for heavy load improves.

The maximum groove width W2 of the trunk part is preferably 2.0 mm or more, more preferably 3.0 mm or more, and further preferably 4.0 mm or more. By setting W2 to be within the above-described range, even in the late wear stage, the width of the thin circumferential groove is easily secured, making it possible to easily secure sufficient drainage performance. On the other hand, W2 is preferably 12.0 mm or less, more preferably 11.0 mm or less, and further preferably 10.0 mm or less. By setting W2 to be within the above-described range, the rubber volume of the tread part 3 is easily secured. In this way, abrasion resistance of the tire for heavy load improves.

FIG. 4 is a variation of the thin circumferential groove. For the variation, with respect to portions not explained below, a configuration of the above-described thin circumferential groove can be adopted.

In FIG. 4, the thin circumferential groove is to comprise an opening 13 (a tapered part) whose groove width increases in a tapered shape, which opening is arranged on the outer side of the neck part in the tire radial direction. With the tapered part, the volume of the circumferential groove in the early wear stage increases. Moreover, with the tapered part, the volume of water flowing from the neck part into the trunk part increases. In this way, the drainage performance of the tread part is enhanced.

The 0°C E* of the rubber composition constituting the tread part according to the present embodiment is preferably 8.5 MPa or more, more preferably 9.0 MPa or more, further preferably 10.0 MPa or more, and particularly preferably 11.0 MPa or more. Moreover, the 0°C E* is preferably 15.0 MPa or less, more preferably 13.0 MPa or less, and further preferably 12.5 MPa or less.

The 0°C tan δ of the rubber composition constituting the tread part according to the present embodiment is preferably 0.10 or more, more preferably 0.15 or more, further preferably 0.17 or more, further preferably 0.19 or more, and particularly preferably 0.20 or more. Moreover, the 0°C tan δ is preferably 0.40 or less, more preferably 0.30 or less, and further preferably 0.25 or less.

Besides, 0°C E* and 0°C tan δ can be appropriately adjusted according to the type and compounding amount of a rubber component, a filler, a softener, and the like to be described below. For example, by increasing the amount of a filler in the rubber composition, decreasing the content of a softener, and the like, 0°C E* can be increased. Thus, a skilled person can appropriately adjust 0°C E* and 0°C tan δ of the rubber composition.

The glass transition temperature (Tg) of the rubber composition constituting the tread part according to the present embodiment is preferably - 70°C or more, more preferably -60°C or more, and further preferably -50°C or more. Moreover, the Tg is preferably -20°C or less, more preferably -30°C or less, and further preferably -35°C or less. Besides, Tg of the rubber composition can be appropriately adjusted according to the type and compounding amount of a rubber component, a filler, a softener, and the like to be described below. Thus, a skilled person can appropriately adjust Tg of the rubber composition.

From a viewpoint of riding comfort performance, a rubber hardness Hs of the rubber composition constituting the tread part according to the present embodiment is preferably over 65, more preferably over 66, and further preferably over 67. Moreover, from a viewpoint of the effects of the present invention, the rubber hardness Hs is preferably less than 75, more preferably less than 74, and further preferably less than 73.

The rubber hardness of the rubber composition can be appropriately adjusted according to the type and compounding amount of a rubber component, a filler, a softener, and the like to be described below. For example, by increasing the content of oil, the rubber hardness can be decreased, and conversely, by decreasing it, the rubber hardness can be increased. Thus, a skilled person can appropriately adjust the rubber hardness.

In a case that the tread part comprises two or more rubber layers, each of property values such as 0°C E* of the rubber composition constituting the tread part can be satisfied by either one of the rubber layers, but it is preferably satisfied by the cap rubber layer.

[Rubber composition]

A rubber composition constituting the tread part of the tire for heavy load according to the present embodiment (below called the rubber composition according to the present embodiment) can be manufactured using raw materials, all of which raw materials are to be explained below. Unless otherwise noted, it can be applied to any rubber layer of the tread part.

<Rubber component>

In the rubber composition according to the present embodiment, diene-based rubbers are suitably used as rubber components. Examples of the diene-based rubbers include, for example, isoprene-based rubbers, butadiene rubbers (BRs), styrene-butadiene rubbers (SBRs), styrene-isoprene rubbers (SIRs), a styrene-isoprene-butadiene rubber (SIBR), a chloroprene rubber (CR), an acrylonitrile-butadiene rubber (NBR), and the like. These diene-based rubbers can be used alone or two or more thereof can be used in combination. The rubber composition according to the present embodiment comprises, preferably, the isoprene-based rubbers and, more preferably, the isoprene-based rubbers and the BRs.

(Isoprene-based rubbers)

As the isoprene-based rubbers, those common in the tire industry, such as an isoprene rubber (IR), a natural rubber, and the like, for example, can be used. In the natural rubber, in addition to a non-refined natural rubber (NR), an epoxidized natural rubber (ENR), a hydrogenated natural rubber (HNR), a deproteinized natural rubber (DPNR), an ultra pure natural rubber (UPNR), a refined natural rubber including a grafted natural rubber, etc., and the like are also included. These isoprene-based rubbers can be used alone or two or more thereof can be used in combination.

The NR is not particularly limited, and, as the NR, those common in the tire industry, such as, for example, SIR20, RSS#3, TSR20, and the like, can be used.

The content of the isoprene-based rubber in the rubber component is preferably 40% or more by mass, more preferably 45% or more by mass, further preferably 50% or more by mass, further preferably 55% or more by mass, further preferably 70% or more by mass, and particularly preferably 75% or more by mass. Moreover, the above-described content is preferably 99% or less by mass, more preferably 95% or less by mass, further preferably 90% or less by mass, and particularly preferably 85% or less by mass. It is considered that since the isoprene-based rubber has a molecular weight larger than that of the other rubber components, the content of the isoprene-based rubber being in the above-described range will increase the strength of the polymer and improve the durability performance.

(BR)

The BR is not particularly limited, and those commonly used in the tire industry can be used, such as, for example, a BR having a cis content of less than 50 mol % (a low cis BR), a BR having a cis content of 90 mol % or more (a high cis BR), a rare-earth-based butadiene rubber synthesized using a rare earth element-based catalyst (a rare-earth-based BR), a BR containing a syndiotactic polybutadiene crystal (an SPB-containing BR), a modified BR (a high cis modified BR, a low cis modified BR), and the like, and the rubber composition preferably comprises the modified BR. These BRs can be used alone or two or more thereof can be used in combination.

As the high cis BR, those commercially available from Zeon Corporation, Ube Industries, Ltd., JSR Corporation, etc., for example, can be used. When the high cis BR is comprised, low temperature properties and abrasion resistance can be improved. The cis content of the high cis BR is preferably 95 mol % or more, more preferably 96 mol % or more, further preferably 97 mol % or more, and particularly preferably 98 mol % or more. Besides, the cis content thereof is measured by the above-described measuring method.

As the modified BR, a modified butadiene rubber (modified BR) modified with a functional group comprising at least one element selected from the group consisting of silicon, nitrogen, and oxygen at its terminal and/or main chain is suitably used.

Examples of the other modified BRs include those obtained by polymerizing 1,3-butadiene with a lithium initiator and then adding a tin compound, and in which a modified BR molecule is bonded by a tin-carbon bond at its terminal (a tin-modified BR), and the like. Moreover, the modified BR can be either hydrogenated or not hydrogenated.

When the rubber composition comprises the BR, a content of the BR in the rubber component is preferably 5 parts or more by mass, more preferably 10 parts or more by mass, further preferably 15 parts or more by mass, and particularly preferably 20 parts or more by mass, from a viewpoint of the effects of the present invention. On the other hand, from a viewpoint of wet grip performance, it is 60% or less by mass, more preferably 50% or less by mass, and further preferably 40% or less by mass.

(SBR)

The SBR is not particularly limited, and examples thereof include a non-modified solution-polymerized SBR (S-SBR), an emulsion-polymerized SBR (E-SBR), modified SBRs thereof (a modified S-SBR, a modified E-SBR), and the like. Examples of the modified SBR include an SBR modified at its terminal and/or main chain, a modified SBR coupled with tin, a silicon compound, etc. (a modified SBR of condensate or having a branched structure, etc.), and the like. Among them, an S-SBR and modified SBRs are preferable. Moreover, a hydrogenated product of these SBRs (a hydrogenated SBR), and the like can also be used. Among them, the S-SBR is suitably used from a viewpoint of improving wet grip performance and ice grip performance in a well-balanced manner.

The SBRs listed above can be used alone or two or more thereof can be used in combination. As the SBRs listed above, for example, those commercially available from Sumitomo Chemical Co., Ltd., JSR Corporation, Asahi Kasei

**EP 4 523 926 B1**

Corporation, Zeon Corporation, ZS Elastomer Co., Ltd., etc., for example, can be used.

From viewpoints of wet grip performance and abrasion resistance, a styrene content of the SBR is preferably 10% or more by mass, more preferably 15% or more by mass, and further preferably 20% or more by mass. Moreover, from viewpoints of the temperature dependence of grip performance and blow resistance, it is preferably 60% or less by mass, more preferably 55% or less by mass, and further preferably 50% or less by mass. Besides, in the present specification, the styrene content of the SBR is measured by the above-described measuring method.

When the rubber composition comprises the SBR, a content $S_c$ of the SBR in the rubber component is preferably 5% or more by mass, more preferably 10% or more by mass, further preferably 15% or more by mass, and particularly preferably 20% or more by mass from a viewpoint of wet grip performance. Moreover, the upper limit value of the content $S_c$ of the SBR in the rubber component is not particularly limited, so that, for example, it can be set to be 50% or less by mass, 40% or less by mass, 30% or less by mass, 20% or less by mass.

From a viewpoint of the effects of the present invention, Sc/D is 0.60 or more. Moreover, the upper limit value of Sc/D is not particularly limited, but it can be set to be, for example, less than 1.00, less than 0.80. Besides, D is the content, in parts by mass, of silica based on 100 parts by mass of the rubber component when the rubber composition constituting the tread part comprises silica, and the preferable range will be described below.

In the rubber component according to the present embodiment, a total styrene amount S in the rubber component is preferably 3.0% or more by mass, more preferably 5.0% or more by mass, further preferably 7.0% or more by mass, and particularly preferably 10.0% or more by mass, from a viewpoint of the effects of the present invention. Moreover, the upper limit value of the total styrene amount S in the rubber component is not particularly limited, but can be set to be, for example, less than 18.0% by mass, less than 15.0% by mass, less than 12.0% by mass.

From a viewpoint of the effects of the present invention, S/D is preferably 0.050 or more, more preferably 0.080 or more, further preferably 0.100 or more, and particularly preferably 0.130 or more. Moreover, the upper limit value of S/D is not particularly limited, but it can be set to be, for example, 0.250 or less, 0.200 or less. Besides, D is the content, in parts by mass, of silica based on 100 parts by mass of the rubber component when the rubber composition constituting the tread part comprises silica, and the preferable range will be described below.

(Other rubber components)

As the rubber component according to the present embodiment, diene-based rubbers other than the above-described isoprene-based rubbers, BRs, and SBRs, and rubber components other than the diene-based rubbers can be contained. As the rubber components other than the diene-based rubbers, a cross-linkable rubber component commonly used in the tire industry can be used, such as, for example, a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components can be used alone or two or more thereof can be used in combination. The rubber component according to the present embodiment comprises preferably 80% or more by mass, more preferably 90% or more by mass, further preferably 95% by mass, and particularly preferably 98% or more by mass of the diene-based rubber, and can be a rubber component comprising only the diene-based rubber.

<Filler>

Preferably, as fillers, the rubber composition according to the present embodiment comprises silica and further comprises carbon black. Moreover, the fillers can be fillers only consisting of silica and carbon black.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. Besides, in addition to silica described above, silica made from a biomass material such as rice husk and the like can be appropriately used. Such silica can be used alone or two or more thereof can be used in combination.

A nitrogen adsorption-specific surface area ($N_2SA$) of silica is preferably 100 $m^2/g$ or more, more preferably 120 $m^2/g$ or more, further preferably 140 $m^2/g$ or more, and particularly preferably 160 $m^2/g$ or more, from viewpoints of abrasion resistance and elongation at break. Moreover, it is preferably 350 $m^2/g$ or less, more preferably 300 $m^2/g$ or less, and further preferably 250 $m^2/g$ or less, from viewpoints of heat-generating properties and processability. Besides, the $N_2SA$ of silica is measured by the above-described measuring method.

The average primary particle diameter of silica is preferably less than 25 nm, more preferably less than 22 nm, and further preferably less than 20 nm. The lower limit of the average primary particle diameter is not particularly limited, but the average primary particle diameter is preferably over 1 nm, more preferably over 3 nm, and further preferably over 5 nm.

Besides, the average primary particle diameter can be determined by the above-described method.

The content D of silica based on 100 parts by mass of the rubber component can be appropriately set such that $H_1$ x D satisfies the above-described range, but is preferably 17 parts or more by mass, more preferably 18 parts or more by mass, further preferably 20 parts or more by mass, further preferably 30 parts or more by mass, further preferably 40 parts or more by mass, further preferably 50 parts or more by mass, and particularly preferably 55 parts or more by mass, from a viewpoint of the effects of the present invention. Moreover, from a viewpoint of the tire strength, D is preferably 100 parts or less by mass, more preferably 90 parts or less by mass, further preferably 80 parts or less by mass, and particularly preferably 75 parts or less by mass. Besides, in a case that the rubber composition constituting the tread part is composed of two or more rubber layers, the content, in parts by mass, of silica based on 100 parts by mass of the rubber component when the rubber composition constituting the cap rubber layer comprises silica is defined as D.

(Carbon black)

Carbon black is not particularly limited, those common in the tire industry can be used, such as GPF, FEF, HAF, ISAF, SAF, and the like, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be suitably used, and, in addition, in-house synthesized products and the like can also be suitably used. These carbon blacks can be used alone or two or more thereof can be used in combination.

A nitrogen adsorption-specific surface area ($N_2SA$) of carbon black is preferably 20 $m^2$/g or more, more preferably 50 $m^2$/g or more, further preferably 80 $m^2$/g or more, and particularly preferably 100 $m^2$/g or more, from a viewpoint of reinforcing properties. Moreover, from viewpoints of fuel efficiency and processability, the $N_2SA$ is preferably 250 $m^2$/g or less, more preferably 200 $m^2$/g or less, and further preferably 150 $m^2$/g or less. Besides, the $N_2SA$ of carbon black is measured by the above-described measuring method.

The average primary particle diameter of carbon black is preferably less than 30 nm, more preferably less than 26 nm, further preferably less than 23 nm, and particularly preferably 22 nm or less. The lower limit of the average primary particle diameter is not particularly limited, but the average primary particle diameter is preferably over 5 nm, more preferably over 8 nm, and further preferably over 10 nm. Besides, the average primary particle diameter can be determined by the above-described method.

(The other fillers)

As fillers other than silica and carbon black, those commonly used conventionally in the tire industry can be compounded, such as aluminum hydroxide, calcium carbonate, alumina, clay, talc, and the like, for example. Moreover, biochar can also be used.

In the rubber composition according to the present embodiment, the total content of fillers based on 100 parts by mass of the rubber component is preferably over 30 parts by mass, more preferably over 40 parts by mass, further preferably over 50 parts by mass, and particularly preferably over 55 parts by mass, from a viewpoint of the effects of the present invention. Moreover, the upper limit value of the total content of fillers based on 100 parts by mass of the rubber component is preferably less than 100 parts by mass, more preferably less than 80 parts by mass, and further preferably less than 70 parts by mass.

(Silane coupling agent)

Silica is preferably used in combination with a silane coupling agent. The silane coupling agent is not particularly limited, so that an arbitrary silane coupling agent conventionally used in combination with silica in the tire industry can be used, and examples include, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycydoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, the rubber composition preferably comprises sulfide-based silane coupling agents and/or mercapto-based silane coupling agents. As the silane coupling agents, those commercially available from Evonik Degussa GmbH, Momentive Performance Materials, and the like, for example, can be used. These silane coupling agents can be used alone or two or more thereof can be used in combination.

A content of the silane coupling agent based on 100 parts by mass of the rubber component is preferably 1.0 parts or more by mass, more preferably 2.0 parts or more by mass, and further preferably 2.5 parts or more by mass, from a viewpoint of enhancing the dispersibility of silica. Moreover, from a viewpoint of preventing a decrease in abrasion resistance, it is preferably 12 parts or less by mass, more preferably 10 parts or less by mass, and further preferably 8.0 parts or less by mass.

A content of the silane coupling agent based on 100 parts by mass of silica is preferably 1.0 parts or more by mass, more preferably 3.0 parts or more by mass, and further preferably 5.0 parts or more by mass, from a viewpoint of enhancing the dispersibility of silica. Moreover, from a viewpoint of preventing a decrease in abrasion resistance, it is preferably 30 parts or less by mass, more preferably 20 parts or less by mass, and further preferably 15 parts or less by mass.

<Softener>

The rubber composition according to the present embodiment can comprise a softener. Examples of the softeners include a resin component, oil, a liquid rubber, an ester-based plasticizer, and the like, for example. Besides, these softeners also include extended oils, extended resins, extended liquid rubber components that have undergone oil extension, resin extension, liquid rubber extension, and the like. These softeners may be petroleum-derived or biomass-derived. Moreover, low molecular weight hydrocarbon components obtained by thermal decomposition and extraction of used tires and products comprising various components may also be used as the softeners.

(Resin component)

Resin components are not particularly limited, and examples of the resin components include a petroleum resin, a terpene-based resin, a rosin-based resin, a phenol-based resin, and the like being commonly used in the tire industry. These resin components can be used alone or two or more thereof can be used in combination.

(Oil)

Examples of oils include, for example, process oils, vegetable fats, animal fats, and the like. Examples of the process oils include a paraffin-based process oil, a naphthene-based process oil, an aromatic-based process oil, and the like. Moreover, as an environmental measure, a process oil having a low content of a polycyclic aromatic compound (PCA) can also be used. Examples of the process oil having a low content of a PCA include mild extraction solvates (MES); a treated distillate aromatic extract (TDAE); a heavy naphthenic oil, and the like. In addition to the above-described oils, from a viewpoint of life cycle assessment, a used lubricating oil after being used in a rubber mixer, an engine, and the like, and a waste cooking oil used in restaurants, which waste cooking oil is appropriately purified, can also be used.

(Liquid rubber)

The rubber composition according to the present embodiment preferably comprises a liquid rubber. The liquid rubber is not particularly limited as long as it is a polymer in a liquid state at room temperature (25°C), and examples of the liquid rubbers include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

(Ester-based plasticizer)

Examples of the ester-based plasticizers include, for example, dibutyl adipate (DBA), diisobutyl adipate (DIBA), dioctyl adipate (DOA), di2-ethylhexyl azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like., and, among them, dioctyl sebacate (DOS) is suitably used. These ester-based plasticizers may be used alone, or two or more thereof may be used in combination.

When the rubber composition comprises the softeners, the total content of the softeners based on 100 parts by mass of the rubber component is preferably over 1 part by mass, more preferably over 5 parts by mass, and further preferably over 8 parts by mass, from a viewpoint of processability. Moreover, from a viewpoint of abrasion resistance, it is preferably less than 100 parts by mass, more preferably less than 80 parts by mass, and further preferably less than 60 parts by mass.

<The other compounding agent>

The rubber composition according to the present embodiment can appropriately comprise compounding agents commonly used conventionally in the tire industry, such as, for example, wax, a processing aid, an antioxidant, stearic acid, zinc oxide, a cross-linking agent, a vulcanization accelerator, and the like, in addition to the previously-described components.

When the rubber composition comprises the wax, a content of the wax based on 100 parts by mass of the rubber component is, from a viewpoint of weather resistance of a rubber, preferably over 0.5 parts by mass, more preferably over 1.0 parts by mass, and further preferably 1.5 parts or more by mass. Moreover, it is preferably less than 10 parts by mass, more preferably less than 7.0 parts by mass, and further preferably less than 5.0 parts by mass from a viewpoint of preventing whitening of a tire due to bloom.

When the rubber composition comprises the zinc oxide, a content of the zinc oxide based on 100 parts by mass of the rubber component is, from a viewpoint of processability, preferably over 1.0 parts by mass, more preferably over 2.0 parts by mass, and further preferably over 2.5 parts or more by mass. Moreover, it is preferably less than 10 parts by mass, more preferably less than 8.0 parts by mass, and further preferably less than 5.0 parts by mass, from a viewpoint of abrasion resistance.

When the rubber composition comprises the stearic acid, a content of the stearic acid based on 100 parts by mass of the rubber component is, from a viewpoint of processability, preferably over 1.0 parts by mass, more preferably over 2.0 parts by mass, and further preferably over 2.5 parts by mass. Moreover, it is preferably less than 10 parts by mass, more preferably less than 8.0 parts by mass, and further preferably less than 5.0 parts by mass, from a viewpoint of vulcanization rate.

The antioxidant is not particularly limited, and examples thereof include, for example, an antioxidant such as each amine-based, quinoline-based, quinone-based, phenol-based, and imidazole-based compound, a carbamate metal salt, and the like, and phenylenediamine-based antioxidants such as N-(1,3-Dimethylbutyl)-N'-phenyl-p-phenylenediamine, N-Isopropyl-N'-phenyl-p-phenylenediamine, N,N'-Diphenyl-p-phenylenediamine, N,N'-Di-2-naphthyl-p-phenylenediamine, N-cyclohexyl-N'-phenyl-p-phenylenediamine, and the like, and quinoline-based antioxidants such as polymerized 2,2,4-trimethyl-1,2-dihydroquinoline, 6-Ethoxy-2,2,4-trimethyl-1,2-dihydroquinoline, and the like are preferable, and amine-based antioxidants are more preferable. These antioxidants may be used alone or two or more thereof may be used in combination.

(Cross-linking agent)

As the cross-linking agents, sulfurs are suitably used. As sulfurs, a powdered sulfur, an oil-treated sulfur, a precipitated sulfur, a colloidal sulfur, an insoluble sulfur, a highly dispersible sulfur, and the like can be used.

When the rubber composition comprises sulfur, a content of sulfur based on 100 parts by mass of the rubber component is preferably 0.1 parts or more by mass, more preferably 0.3 parts or more by mass, and further preferably 0.5 parts or more by mass, from a viewpoint of securing a sufficient vulcanization reaction. Moreover, the content is preferably 5.0 parts or less by mass, more preferably 4.0 parts or less by mass, further preferably 3.0 parts or less by mass, and particularly preferably 2.5 parts or less by mass, from a viewpoint of preventing deterioration.

The vulcanization accelerator is not particularly limited, and examples of the vulcanization accelerators include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like, and among them, from a viewpoint that desired effects are more suitably obtained, the sulfenamide-based and/or guanidine-based vulcanization accelerators are preferable, and a combined use of these two is more preferable.

When the rubber composition comprises the vulcanization accelerators, the total content of the vulcanization accelerators based on 100 parts by mass of the rubber component is preferably 1 part or more by mass, more preferably 1.5 parts or more by mass, and further preferably 2.0 parts or more by mass. Moreover, the content of the vulcanization accelerators based on 100 parts by mass of the rubber component is preferably 8 parts or less by mass, more preferably 7 parts or less by mass, and further preferably 6 parts or less by mass. When the content of the vulcanization accelerators is within the above-described ranges, there is a tendency to be able to secure breaking strength and elongation.

<Application>

Tires for heavy load according to the present embodiment are tires being intended to be mounted on a four-wheeled automobile, include tires for large trucks and buses as well as tires for small trucks, buses, vans, and the like, and are tires with the standardized load of over 1000 kg.

EXAMPLE

Examples considered to be preferable in implementation (Examples) are shown below, but the scope of the present invention is not to be limited to the Examples.

Results calculated based on evaluation methods described below are shown in Tables 1 and 2, considering tires for heavy load (size: 275/70R22.5, rim: 22.5 x 7.50), each of which forms a basic structure shown in FIG. 1, has the tread pattern shown in FIG. 2, and comprises thin circumferential grooves of FIG. 3, using various chemicals shown below.

NR: RSS#3

SBR: C2525 (styrene content: 25% by mass, vinyl content: 25 mol %, Tg: -52°C), manufactured by Versalis S.p.A.

BR: BUNA CB24 (BR synthesized using Nd-based catalyst, cis content: 96 mol %, vinyl content: 0.7 mol %, Mw: 500,000), manufactured by ARLANXEO

Carbon black: Show Black N134 ($N_2SA$: 148 $m^2$/g, average primary particle diameter: 18 nm), manufactured by Cabot Japan K.K.

Silica: Ultrasil 9100GR ($N_2SA$: 235 $m^2$/g, average primary particle diameter: 15 nm), manufactured by Evonik Degussa GmbH

Silane coupling agent: Si266 (bis(3-triethoxysilylpropyl)disulfide), manufactured by Evonik Degussa GmbH

Wax: Ozoace 0355, manufactured by Nippon Seiro, Co., Ltd.

Zinc oxide: Zinc oxide No. 1, manufactured by Mitsui Mining & Smelting Co., Ltd.

Stearic acid: Beads stearic acid "Tsubaki", manufactured by NOF CORPORATION

Antioxidant: NOCRAC 6C (N-phenyl-N'-(1,3-Dimethylbutyl)-p-phenylenediamine (6PPD)), manufactured by Ouchi Shinko Chemical Industrial Co., Ltd.

Sulfur: Powdered sulfur (5% oil-containing powdered sulfur), manufactured by Tsurumi Chemical Industry Co.

Vulcanization accelerator 1: Nocceler CZ (N-cyclohexyl-2-benzothiazolylsulfenamide (CBS)), manufactured by Ouchi Shinko Chemical Industry Co., Ltd.

Vulcanization accelerator 2: Nocceler D (1,3-Diphenylguanidine (DPG)), manufactured by Ouchi Shinko Chemical Industry Co., Ltd.

(Examples and comparative examples)

According to the compounding formulations shown in Tables 1 and 2 using a 1.7 L closed Banbury mixer, chemicals other than sulfur and vulcanization accelerators are kneaded for 1 to 10 minutes until a discharge temperature reaches 150 to 160°C to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is extruded and molded into the shape of the tread part using an extruder comprisng a mouth of a predetermined shape, pasted together with other tire members to produce an unvulcanized tire, and the unvulcanized tire is press-vulcanized at 150°C for 30 minutes to obtain each of the test tires.

<Measurement of rubber hardness>

A sample for hardness measurement is produced by cutting out, from the tread part of each test tire, with 20 mm in length x 4 mm in width x 1 mm in thickness, such that a tire circumferential direction is the long side and the tire radial direction is a thickness direction. The rubber hardness at 25°C is measured for the sample for hardness measurement by pressing a type A durometer against the sample from the tread part ground surface side in accordance with JIS K 6253.

<Measurements of 0°C tan $\delta$, 0°C E*, and glass transition temperature (Tg)>

A sample for the present measurements is produced by cutting out, from the tread part of each test tire, with 20 mm in length x 4 mm in width x 1 mm in thickness, such that a tire circumferential direction is the long side and the tire radial direction is a thickness direction. For each rubber test piece, the loss tangent (tan $\delta$) and the complex elastic modulus (E*) are measured under a condition of a temperature at 0°C, a frequency of 10 Hz, an initial strain of 10%, and a dynamic strain of 2.5%, using a dynamic viscoelasticity evaluation apparatus (EPLEXOR series manufactured by gabo Systemtechnik GmbH). Moreover, the temperature distribution curve of tan $\delta$ at -60 to 40°C is measured under a condition of a temperature at 70°C, a frequency of 10 Hz, an initial strain of 1%, an amplitude of ±0.1%, and a temperature increase rate of 3°C/min, and the temperature corresponding to the greatest tan $\delta$ value in the obtained temperature distribution curve (tan $\delta$ peak

temperature) is defined as the glass transition temperature (Tg).

<Wet grip performance>

Each test tire is assembled onto a rim, and the rim-assembled test tire is mounted on the rear wheels of a bus, the test vehicle. With this test vehicle, the braking distance on a wet asphalt road surface from the initial speed of 100 km/h is determined. Results are shown in indices with the result of a reference comparative example (Comparative example 9) as 100. The greater the index, the better the wet grip performance.

(wet grip performance index) =

(braking distance of reference comparative example) / (braking distance of each

test tire) x 100

Table 1

| | Example | | | | | | | | |
|---|---|---|---|---|---|---|---|---|---|
| | 1 | 2 | 3 | 4 | 5 | 6 | 7 | 8 | 9 |
| Compounding amount | | | | | | | | | |
| NR | 80 | 80 | 80 | 80 | 80 | 60 | 60 | 60 | 60 |
| SBR | - | - | - | - | - | 20 | 20 | 40 | 40 |
| BR | 20 | 20 | 20 | 20 | 20 | 20 | 20 | - | - |
| Carbon black | 35 | 35 | 32 | 32 | 30 | 5.0 | 30 | 5.0 | 5.0 |
| Silica | 20 | 20 | 25 | 25 | 30 | 60 | 30 | 60 | 60 |
| Silane coupling agent | 2.0 | 2.0 | 2.5 | 2.5 | 3.0 | 6.0 | 3.0 | 6.0 | 6.0 |
| Wax | 1.5 | 1.5 | 1.5 | 1.5 | 1.5 | 1.5 | 1.5 | 1.5 | 1.5 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Antioxidant | 1.5 | 1.5 | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 | 1.5 | 1.5 |
| Vulcanization accelerator 1 | 1.5 | 1.5 | 1.5 | 1.5 | 1.5 | 1.5 | 1.5 | 1.5 | 1.5 |
| Vulcanization accelerator 2 | 0.5 | 0.5 | 0.5 | 0.5 | 0.5 | 0.5 | 0.5 | 0.5 | 0.5 |
| Physical property | | | | | | | | | |
| Rubber hardness Hs | 68.0 | 68.0 | 68.0 | 68.0 | 68.0 | 68.0 | 68.0 | 68.0 | 68.0 |
| 0°C E* | 12.0 | 12.0 | 11.8 | 11.8 | 11.5 | 9.5 | 10.5 | 9.0 | 9.0 |
| 0°C tan $\delta$ | 0.23 | 0.23 | 0.23 | 0.23 | 0.22 | 0.20 | 0.21 | 0.19 | 0.19 |
| Glass transition temperature, in °C | -50 | -50 | -50 | -50 | -50 | -50 | -50 | -48 | -48 |
| Tire | | | | | | | | | |
| $H_1$, in mm | 15.0 | 15.0 | 12.0 | 12.0 | 15.0 | 15.0 | 15.0 | 15.0 | 15.0 |
| $H_2$, in mm | 12.5 | 12.5 | 10 | 10 | 12.5 | 12.5 | 12.5 | 12.5 | 12.5 |
| R | 0.90 | 0.95 | 0.90 | 0.95 | 0.90 | 0.90 | 0.90 | 0.93 | 0.93 |

(continued)

| Tire | | | | | | | | | |
|---|---|---|---|---|---|---|---|---|---|
| T, in mm | 20 | 20 | 20 | 20 | 20 | 20 | 20 | 20 | 18 |
| $H_1 \times D$ | 300 | 300 | 300 | 300 | 450 | 900 | 450 | 900 | 900 |
| D / R | 22.2 | 21.1 | 27.8 | 26.3 | 33.3 | 66.7 | 33.3 | 64.5 | 64.5 |
| $H_2 / H_1$ | 0.83 | 0.83 | 0.83 | 0.83 | 0.83 | 0.83 | 0.83 | 0.83 | 0.83 |
| Sc / D | 0 | 0 | 0 | 0 | 0 | 0.33 | 0.67 | 0.67 | 0.67 |
| Total styrene amount, in % by mass | 0 | 0 | 0 | 0 | 0 | 5.0 | 5.0 | 10.0 | 10.0 |
| S / D | 0 | 0 | 0 | 0 | 0 | 0.08 | 0.17 | 0.17 | 0.17 |
| Wet performance | 104 | 106 | 104 | 106 | 109 | 112 | 120 | 127 | 130 |

Table 2

| | Comparative example | | | | | | | | |
|---|---|---|---|---|---|---|---|---|---|
| | 1 | 2 | 3 | 4 | 5 | 6 | 7 | 8 | 9 |
| Compounding amount | | | | | | | | | |
| NR | 80 | 80 | 80 | 80 | 80 | 60 | 80 | 80 | 80 |
| SBR | - | - | - | - | - | 40 | - | - | - |
| BR | 20 | 20 | 20 | 20 | 20 | - | 20 | 20 | 20 |
| Carbon black | 45 | 45 | 45 | 35 | 30 | 5.0 | 45 | 35 | 35 |
| Silica | 10 | 10 | 10 | 20 | 30 | 60 | 10 | 20 | 20 |
| Silane coupling agent | 1.0 | 1.0 | 1.0 | 2.0 | 3.0 | 6.0 | 1.0 | 2.0 | 2.0 |
| Wax | 1.5 | 1.5 | 1.5 | 1.5 | 1.5 | 1.5 | 1.5 | 1.5 | 1.5 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Antioxidant | 1.5 | 1.5 | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 | 1.5 | 1.5 |
| Vulcanization accelerator 1 | 1.5 | 1.5 | 1.5 | 1.5 | 1.5 | 1.5 | 1.5 | 1.5 | 1.5 |
| Vulcanization accelerator 2 | 0.5 | 0.5 | 0.5 | 0.5 | 0.5 | 0.5 | 0.5 | 0.5 | 0.5 |
| Physical property | | | | | | | | | |
| Rubber hardness Hs | 68.0 | 68.0 | 68.0 | 68.0 | 68.0 | 68.0 | 68.0 | 68.0 | 68.0 |
| 0°C E* | 13.0 | 13.0 | 13.0 | 12.0 | 11.5 | 9.0 | 13.0 | 12.0 | 12.0 |
| 0°C tan $\delta$ | 0.24 | 0.24 | 0.24 | 0.23 | 0.22 | 0.19 | 0.24 | 0.23 | 0.23 |
| Glass transition temperature, in °C | -50 | -50 | -50 | -50 | -50 | -48 | -50 | -50 | -50 |
| Tire | | | | | | | | | |
| $H_1$, in mm | 17.0 | 15.0 | 17.0 | 17.0 | 17.0 | 17.0 | 15.0 | 17.0 | 15.0 |
| $H_2$, in mm | 14.1 | 12.5 | 14.1 | 14.1 | 14.1 | 14.1 | 12.5 | 14.1 | 12.5 |
| R | 0.85 | 0.85 | 0.90 | 0.85 | 0.85 | 0.85 | 0.90 | 0.90 | 0.85 |
| T, in mm | 20 | 20 | 20 | 20 | 20 | 20 | 20 | 20 | 20 |
| $H_1 \times D$ | 170 | 150 | 170 | 340 | 510 | 1020 | 150 | 340 | 300 |
| D / R | 11.8 | 11.8 | 11.1 | 23.5 | 35.3 | 70.6 | 11.1 | 22.2 | 23.5 |
| $H_2 / H_1$ | 0.83 | 0.83 | 0.83 | 0.83 | 0.83 | 0.83 | 0.83 | 0.83 | 0.83 |

(continued)

| Tire | | | | | | | | | |
|---|---|---|---|---|---|---|---|---|---|
| Sc / D | 0 | 0 | 0 | 0 | 0 | 0.67 | 0 | 0 | 0 |
| Total styrene amount, in % by mass | 0 | 0 | 0 | 0 | 0 | 10.0 | 0 | 0 | 0 |
| S / D | 0 | 0 | 0 | 0 | 0 | 0.17 | 0 | 0 | 0 |
| Wet performance | 89 | 89 | 92 | 94 | 94 | 94 | 96 | 99 | 100 |

REFERENCE SIGNS LIST

1 Tire for heavy load
2 Tread (ground) surface
3 Tread part
4 Cap rubber layer
5 Base rubber layer
6 Belt layer
7 Sidewall part
8 Main circumferential groove
9 Thin circumferential groove
10 Center sipe
11 Neck part
12 Trunk part
13 Opening (tapered part)
14 Bead part
15 Inner liner
16 Carcass
18 Shoulder land part
19 Crown land part
22 Bead core
24 Bead apex
26 Carcass ply
CL Tire equator
T Thickness of tread part
$H_1$ Groove depth of deepest part of main circumferential groove
$H_2$ Depth of deepest part of sipe
W Tire width direction
Te Tread ground end
TW Tread ground width

## Claims

1. A tire for heavy load (1), which tire comprises a tread part (3),

   wherein the tread part (3) comprises one or a plurality of main circumferential grooves (8) extending continuously in the tire circumferential direction,
   wherein the tread part (3) is composed of a rubber composition comprising a rubber component and silica,
   wherein the groove depth of the deepest part of the main circumferential groove (8) is defined as $H_1$, in mm, and a content of silica based on 100 parts by mass of the rubber component when the rubber composition comprises silica is defined as D, in parts by mass,
   $H_1$ is 15.0 or less, $H_1$ x D is 250 or more, preferably 350 or more,
   a land ratio R on a ground surface (2) of the tread part (3) after the tread part (3) is caused to wear along the tread radius such that the groove depth of the deepest part of the main circumferential groove (8) is 75% of that when the tire is new is 0.90 or more, and

wherein a content of a styrene-butadiene rubber in the rubber component is defined as Sc, in % by mass, Sc/D is 0.60 or more.

2. The tire for heavy load (1) of claim 1, wherein D/R is 30 or more, preferably 50 or more.

3. The tire for heavy load (1) of any one of claims 1 or 2, wherein the total styrene amount in the rubber component is defined as S, in % by mass, S/D is 0.130 or more.

4. The tire for heavy load (1) of any one of claims 1 to 3, wherein the tread part (3) comprises two main circumferential grooves (8) extending continuously in the tire circumferential direction, a pair of shoulder land parts (18) divided by the main circumferential groove (8) and a ground end, and a crown land part (19) positioned between the pair of shoulder land parts (18); and
wherein the crown land part (19) comprises one or a plurality of thin circumferential grooves (9) extending continuously in the tire circumferential direction.

5. The tire for heavy load (1) of claim 4, wherein the crown land part (19) comprises a sipe extending in the tire width direction, and the groove depth of the deepest part of the sipe is defined as $H_2$, in mm, $H_2/H_1$ is 0.25 or more.

6. The tire for heavy load (1) of claim 5, wherein the pair of shoulder land parts (18) does not comprise a lug groove.

7. The tire for heavy load (1) of any one of claims 1 to 6, wherein the thickness of the tread part (3) when the tire is new is defined as T, in mm, T x D is 320 or more.

8. The tire for heavy load (1) of any one of claims 5 to 7, wherein the thin circumferential groove (9) comprises a neck part (11) having a small groove width, and a trunk part (12) arranged on the inner side of the neck part (11) in the tire radial direction, which trunk part (12) has a portion with a groove width greater than the maximum groove width of the neck part (11).

9. The tire for heavy load (1) of any one of claims 1 to 8, wherein the complex elastic modulus at 0°C (0°C E*) of the rubber composition is 8.5 MPa or more and 13.0 MPa or less.

10. The tire for heavy load (1) of any one of claims 1 to 9, wherein $\tan \delta$ at 0°C (0°C $\tan \delta$) of the rubber composition is 0.15 or more and 0.25 or less.

11. The tire for heavy load (1) of any one of claims 1 to 10,

wherein the tread part (3) is composed of two or more rubber layers, and
wherein a rubber layer whose outer surface constitutes the tread ground surface (2) is defined as a cap rubber layer (4), the thickness of the cap rubber layer (4) is defined as t1, in mm, the thickness of the tread part (3) when the tire is new is defined as T, in mm,
t1/T is 0.76 or more, preferably 0.79 or more, more preferably 0.80 or more.

12. The tire for heavy load (1) of any one of claims 5 to 11, wherein at least one of the thin circumferential grooves (9) comprises an opening whose groove width increases in a tapered shape, which opening is arranged on the outer side of the neck part (11) in the tire radial direction.

**Patentansprüche**

1. Reifen für schwere Lasten (1), wobei der Reifen einen Laufflächenteil (3) umfasst, wobei der Laufflächenteil (3) eine oder mehrere Hauptumfangsrillen (8) umfasst, die sich kontinuierlich in Reifenumfangsrichtung erstrecken,

wobei der Laufflächenteil (3) aus einer Gummimischung besteht, die eine Gummikomponente und Silica umfasst,
wobei die Rillentiefe des tiefsten Abschnitts der Hauptumfangsrille (8) als H1 in mm definiert ist und
ein Silica-Gehalt, bezogen auf 100 Masseteile der Gummikomponente, wenn die Gummimischung Silica enthält, als D in Masseteilen definiert ist,
$H_1$ 15,0 oder weniger beträgt, $H_1$ x D 250 oder mehr, vorzugsweise 350 oder mehr, beträgt,

ein Landverhältnis R auf einer Aufstandsfläche (2) des Laufflächenteils (3), nachdem der Laufflächenteil (3) entlang des Laufflächenradius so abgenutzt wurde, dass die Rillentiefe des tiefsten Teils der Hauptumfangsrille (8) 75 % derjenigen im Neuzustand des Reifens beträgt, 0,90 oder mehr beträgt, und
wobei der Gehalt an Styrol-Butadien-Kautschuk in der Gummikomponente als Sc in Massenprozent definiert ist und Sc/D 0,60 oder mehr beträgt.

2.  Reifen für schwere Lasten (1) nach Anspruch 1, wobei D/R 30 oder mehr, vorzugsweise 50 oder mehr beträgt.

3.  Reifen für schwere Lasten (1) nach einem der Ansprüche 1 oder 2, wobei die Gesamtstyrolmenge in der Gummikomponente, als S, in Massenprozent, definiert ist und S/D 0,130 oder mehr beträgt.

4.  Reifen für schwere Lasten (1) nach einem der Ansprüche 1 bis 3, wobei der Laufflächenteil (3) zwei Hauptumfangsrillen (8), die sich kontinuierlich in Umfangsrichtung des Reifens erstrecken, ein Paar Schulterflächenteile (18), die durch die Hauptumfangsrille (8) und ein Aufstandsende getrennt sind, sowie einen Kronenflächenteil (19) umfasst, der zwischen dem Paar Schulterflächenteile (18) angeordnet ist; und
wobei der Kronenflächenteil (19) eine oder mehrere dünne Umfangsrillen (9) aufweist, die sich kontinuierlich in Reifenumfangsrichtung erstrecken.

5.  Reifen für schwere Lasten (1) nach Anspruch 4, wobei der Kronenflächenteil (19) eine sich in Reifenbreitenrichtung erstreckende Lamelle aufweist und die Rillentiefe des tiefsten Abschnitts der Lamelle als $H_2$ in mm definiert ist, wobei $H_2/H_1$ 0,25 oder mehr beträgt.

6.  Reifen für schwere Lasten (1) nach Anspruch 5, wobei das Paar von Schulterflächenteilen (18) keine Stollenrille aufweist.

7.  Reifen für schwere Lasten (1) nach einem der Ansprüche 1 bis 6, wobei die Dicke des Laufflächenteils (3) im Neuzustand des Reifens als T in mm definiert ist und $T \times D$ 320 oder mehr beträgt.

8.  Reifen für schwere Lasten (1) nach einem der Ansprüche 5 bis 7, wobei die dünne Umfangsrille (9) einen Halsabschnitt (11) mit einer geringen Rillenbreite und einen in Radialrichtung des Reifens auf der Innenseite des Halsabschnitts (11) angeordneten Rumpfabschnitt (12) umfasst, wobei der Rumpfabschnitt (12) einen Abschnitt mit einer Rillenbreite aufweist, die größer ist als die maximale Rillenbreite des Halsabschnitts (11).

9.  Reifen für schwere Lasten (1) nach einem der Ansprüche 1 bis 8, wobei der komplexe Elastizitätsmodul bei 0 °C (0 °C E*) der Gummimischung 8,5 MPa oder mehr und 13,0 MPa oder weniger beträgt.

10. Reifen für schwere Lasten (1) nach einem der Ansprüche 1 bis 9, wobei tan $\delta$ bei 0 °C (0 °C tan $\delta$) der Gummimischung 0,15 oder mehr und 0,25 oder weniger beträgt.

11. Reifen für schwere Lasten (1) nach einem der Ansprüche 1 bis 10, wobei der Laufflächenteil (3) aus zwei oder mehr Gummischichten besteht, und wobei eine Gummischicht, deren Außenfläche die Aufstandsfläche (2) bildet, als Kappengummischicht (4) definiert ist, die Dicke der Kappengummischicht (4) als t1 in mm definiert ist, die Dicke des Laufflächenteils (3) im Neuzustand des Reifens als T in mm definiert ist, t1/T 0,76 oder mehr, vorzugsweise 0,79 oder mehr, noch bevorzugter 0,80 oder mehr beträgt.

12. Reifen für schwere Lasten (1) nach einem der Ansprüche 5 bis 11, wobei mindestens eine der dünnen Umfangsrillen (9) eine Öffnung aufweist, deren Rillenbreite sich in einer sich verjüngenden Form vergrößert, wobei die Öffnung auf der Außenseite des Halsabschnitts (11) in Radialrichtung des Reifens angeordnet ist.

## Revendications

1.  Pneu pour charges lourdes (1), lequel pneu comprend une partie de bande de roulement (3),

    dans lequel la partie de bande de roulement (3) comprend une ou plusieurs rainures circonférentielles principales (8) s'étendant de manière continue dans la direction circonférentielle du pneu,
    dans lequel la partie de bande de roulement (3) est composée d'une composition de caoutchouc comprenant un composant de caoutchouc et de la silice, dans lequel la profondeur de la partie la plus profonde de la rainure circonférentielle principale (8) est définie comme $H_1$, en mm, et

la teneur en silice, rapportée à 100 parties en masse du composant de caoutchouc lorsque la composition de caoutchouc comprend de la silice, est définie comme D, en parties en masse,

$H_1$ est égal ou inférieur à 15,0, $H_1$ x D est égal ou supérieur à 250, de préférence égal ou supérieur à 350,

le rapport de surface de contact R sur une surface de contact au sol (2) de la partie de bande de roulement (3) après que la partie de bande de roulement (3) a été usée le long du rayon de la bande de roulement de telle sorte que la profondeur de rainure de la partie la plus profonde de la rainure circonférentielle principale (8) soit égale à 75 % de celle du pneu neuf est de 0,90 ou plus, et

dans lequel la teneur en caoutchouc styrène-butadiène dans le composant de caoutchouc est définie comme Sc, en % en masse, et Sc/D est égal ou supérieur à 0,60.

**2.** Pneu pour charges lourdes (1) selon la revendication 1, dans lequel D/R est égal ou supérieur à 30, de préférence égal ou supérieur à 50.

**3.** Pneu pour charges lourdes (1) selon l'une quelconque des revendications 1 ou 2, dans lequel la quantité totale de styrène dans le composant de caoutchouc est définie comme S, en % en masse, S/D est de 0,130 ou plus.

**4.** Pneu pour charges lourdes (1) selon l'une quelconque des revendications 1 à 3, dans lequel la partie de bande de roulement (3) comprend deux rainures circonférentielles principales (8) s'étendant de manière continue dans la direction circonférentielle du pneumatique, une paire de parties de bande d'épaulement (18) séparées par la rainure circonférentielle principale (8) et une extrémité au sol, et une partie de bande de couronne (19) positionnée entre la paire de parties de bande d'épaulement (18); et

dans lequel la partie de bande de couronne (19) comprend une ou plusieurs rainures circonférentielles minces (9) s'étendant de manière continue dans la direction circonférentielle du pneu.

**5.** Pneu pour charges lourdes (1) selon la revendication 4, dans lequel la partie de bande de couronne (19) comprend une lamelle s'étendant dans la direction de la largeur du pneumatique, et la profondeur de la rainure de la partie la plus profonde de la lamelle est définie comme $H_2$, en mm, $H_2/H_1$ étant égal ou supérieur à 0,25.

**6.** Pneu pour charges lourdes (1) selon la revendication 5, dans lequel la paire de parties de bande d'épaulement (18) ne comprend pas de rainure de crampon.

**7.** Pneu pour charges lourdes (1) selon l'une quelconque des revendications 1 à 6, dans lequel l'épaisseur de la partie de bande de roulement (3) lorsque le pneumatique est neuf est définie comme T, en mm, et T x D est égal ou supérieur à 320.

**8.** Pneu pour charges lourdes (1) selon l'une quelconque des revendications 5 à 7, dans lequel la rainure circonférentielle mince (9) comprend une partie de col (11) ayant une faible largeur de rainure, et une partie de corps (12) disposée sur le côté intérieur de la partie de col (11) dans la direction radiale du pneumatique, laquelle partie de corps (12) comporte une portion dont la largeur de rainure est supérieure à la largeur de rainure maximale de la partie de col (11).

**9.** Pneu pour charges lourdes (1) selon l'une quelconque des revendications 1 à 8, dans lequel le module d'élasticité complexe à 0 °C (0 °C E*) de la composition de caoutchouc est 8,5 MPa ou plus et 13,0 MPa ou moins.

**10.** Pneu pour charges lourdes (1) selon l'une quelconque des revendications 1 à 9, dans lequel tan $\delta$ à 0 °C (0 °C tan $\delta$) de la composition de caoutchouc est 0,15 ou plus et 0,25 ou moins.

**11.** Pneu pour charges lourdes (1) selon l'une quelconque des revendications 1 à 10,

dans lequel la partie de bande de roulement (3) est composée de deux couches de caoutchouc ou plus, et dans lequel une couche de caoutchouc dont la surface extérieure constitue la surface de roulement (2) est définie comme une couche de caoutchouc de revêtement (4), l'épaisseur de la couche de caoutchouc de revêtement (4) est définie comme t1, en mm, l'épaisseur de la partie de bande de roulement (3) lorsque le pneu est neuf est définie comme T, en mm,

t1/T est égal à 0,76 ou plus, de préférence 0,79 ou plus, et plus préférablement 0,80 ou plus.

**12.** Pneu pour charges lourdes (1) selon l'une quelconque des revendications 5 à 11, dans lequel au moins l'une des rainures circonférentielles minces (9) comprend une ouverture dont la largeur de rainure augmente selon une forme conique, laquelle ouverture est disposée sur le côté extérieur de la partie de col (11) dans la direction radiale du pneumatique.

# FIG.1

# FIG.2

# FIG.3

# FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H115411 A
- JP H06279624 A
- EP 4197805 A1
- US 2023023252 A1